Europäisches Patentamt

European Patent Office

Office européen des brevets

(19)

(11) Veröffentlichungsnummer: **0 215 227**
**B1**

(12) # EUROPÄISCHE PATENTSCHRIFT

(45) Veröffentlichungstag der Patentschrift:
22.11.90

(51) Int. Cl.⁵: **B60P 3/055**

(21) Anmeldenummer: 86109561.0

(22) Anmeldetag: **12.07.86**

(54) **Kraftfahrzeug zur Getränkeauslieferung.**

(30) Priorität: **12.09.85 DE 8526052 U**

(43) Veröffentlichungstag der Anmeldung:
**25.03.87 Patentblatt 87/13**

(45) Bekanntmachung des Hinweises auf die Patenterteilung:
**22.11.90 Patentblatt 90/47**

(84) Benannte Vertragsstaaten:
**AT BE CH DE FR GB IT LI LU NL SE**

(56) Entgegenhaltungen:
**FR-A- 782 655**
**FR-A- 2 540 050**
**GB-A- 1 335 711**
**US-A- 3 415 567**

(73) Patentinhaber: **Kölker, Carl Wilhelm, Himmelrich 18,
CH-6340 Baar(CH)**

(72) Erfinder: **Kölker, Carl Wilhelm, Himmelrich 18,
CH-6340 Baar(CH)**

(74) Vertreter: **König, Reimar, Dr.-Ing. et al, Patentanwälte
Dr.-Ing. Reimar König Dipl.-Ing. Klaus Bergen
Wilhelm-Tell-Strasse 14 Postfach 260162,
D-4000 Düsseldorf 1(DE)**

## Beschreibung

Die Erfindung betrifft ein Kraftfahrzeug mit einem eine Ladefläche bereitstellenden Pritschenboden, insbesondere zur Getränkeauslieferung.

Durch die französische Patentschrift 782 655 ist ein Kraftfahrzeug für den Transport insbesondere von Milchkannen mit einem Aufbau bekanntgeworden, bei dem beiderseits einer eine ebene Bodenplatte aufweisenden Mittelkammer in Gefache unterteilte Außenkammern angeordnet sind, die von der Mittelkammer völlig abgetrennt sind und in mehreren Ebenen angeordnete, außen vom Fahrzeug zugängliche Gefache (Regale) aufweisen. Soweit dies die Bodenfreiheit zuläßt, sind die Außenkammern bis unterhalb der Bodenplatte der Mittelkammer verlegt und besitzen somit tiefer gelegene Gefache. Da der mittlere Kammergang völlig von den seitlichen Außenkammern abgetrennt ist, lassen sich die Gefache der Außenkammern somit ausschließlich von außen, d.h. von den Längsseiten des Fahrzeugs her be- und entladen.

Zum seitlichen Be- und Entladen ist aus der französischen Patentschrift 2 540 050 ein Kraftfahrzeug und eine Ladefläche bekannt, die auf einem Tragrahmen aus Längsträgern mit quer darauf ruhenden Auslegern angeordnet ist. Die Ladefläche besitzt eine seitliche Öffnung, die von einer Hebebühne ausgefüllt ist. Die dort besonders große und während des Transports als integrierte Ladefläche voll zur Verfügung stehende Hebebühne eignet sich insbesondere zum Heben und Senken von Normpaletten samt Hubwagen, ohne daß dabei allzu hohe Kräfte für das Heben und Senken erforderlich sind. Ein kräftemäßig günstiges Abstützen und Verschwenken der Hebebühne gewährleisten Parallelogrammlenker, die über Lager beiderseits der Hebebühne angreifen. Allerdings ist auch hierbei das Be- und Entladen vom Inneren des Fahrzeugs her nicht möglich.

Bei der Getränkeauslieferung werden am häufigsten in Flaschen, Dosen oder faßähnlichen Spezialbehältern abgefüllte Getränke, z.B. in Kästen oder in Form von zu Stapeln von sogenannten Weichpackungen zusammengefaßten Dosen transportiert und mittels Paletten, vorzugsweise Normpaletten, in auf dem Pritschenboden des Fahrzeugs zur Aufnahme der Paletten gegebenenfalls angeordneten Palettengefachen gelagert.

Während sich das Beladen voller, d.h. beispielsweise mit Kasten- oder Weichpackungs-Stapeln bestückter Paletten relativ unproblematisch von außen mittels eines Gabelstaplers durchführen läßt, da Fahrzeuge dieser Art von den Längsseiten her zugänglich sind, bereitet wegen der nur eingeschränkten Zugänglichkeit des beladenen Fahrzeugs vor allem das Entladen einzelner Lieferpositionen, wie beispielsweise eines Kastens oder eines Kastenstapels größere Schwierigkeiten. Da die bekannten Fahrzeuge einen von außen nach innen geneigten Pritschenboden aufweisen, sind zum Be- und Entladen allerdings Gabelstapler mit einem geneigten Mast erforderlich, d.h., es müssen aufwendige und teure Sonderkonstruktionen eingesetzt werden.

Der Erfindung liegt die Aufgabe zugrunde, ein Fahrzeug zu schaffen, das bei unveränderten Abmessungen ausreichenden Platz für ein ungestörtes, übersichtliches Be- und Entladen sowohl voller Paletten als auch einzelner Lieferkommissionen besitzt.

Erfindungsgemäß wird diese Aufgabe durch einen gegenüber seitlichen Ladeflächen höher gelegenen Mittelgang des Pritschenbodens gelöst, über den die Ladeflächen von innen frei zugänglich sind und der mit einer seitlichen Ausnehmung versehen ist, in die eine angehobene Hebebühne fluchtend und bündig mit der Oberkante des Mittelgangs eingreift.

Der Höhenunterschied zwischen den seitlichen Ladeflächen und dem sich über die Länge des Pritschenbodens erstreckenden Mittelgang entspricht vorzugsweise der Höhe der verwendeten Paletten von üblicherweise 150 mm, so daß die Oberkante des Ganges bündig an die Oberkante der Paletten anschließt; der Gang und die Paletten verlaufen somit in einer Ebene. Die Breite des Mittelganges ist vorteilhaft so bemessen, daß eine Bedienungsperson den Gang problemlos mit einer Sackkarre oder einem Rollbehälter befahren kann. Ein einzelner Kasten oder Kastenstapel läßt sich dann von der Bedienungsperson aus den seitlichen Palettengefachen auf den in derselben Ebene verlaufenden Mittelgang herausziehen und mittels der Sackkarre oder des Rollbehälters befördern.

Die Lieferpositionen brauchen nicht mehr – wie bisher üblich – auf der Straße zusammengestellt zu werden, wo der Fahrer bislang nicht selten eine große Anzahl von Getränkekästen oder Kastenstapeln aufreihen mußte, was oft den Fußgänger- und Straßenverkehr beeinträchtigt hat, sondern lassen sich –zudem witterungsgeschützt – im Fahrzeug zusammenstellen. Dies ist umso wichtiger, als besonders beim Getränketransport fast immer Teilkommissionen entladen werden müssen. Der Mittelgang bietet zudem die Möglichkeit, die beladenen Paletten von mehreren Seiten auf ihre Vollständigkeit, d.h. den genauen Lieferumfang zu prüfen; bisher ließ sich die Ladung nur von außen überprüfen.

Die fluchtend und bündig mit der Oberkante in einer seitlichen Ausnehmung des Mittelgangs angeordnete Hebebühne trägt dazu bei, daß bei Kommissionen mittlerer Größe die Kastenstapel mit einer Sackkarre über den Mittelgang gefahren und von innen verladen werden können.

Während Kleinstlieferungen beispielsweise heckseitig über eine Tür in der Rückwand des Fahrzeugaufbaus und über eine dort angeordnete Treppe abgewickelt werden können, lassen sich bei Kommissionen mittlerer Größe die Kastenstapel mit der Sackkarre über den Mittelgang auf die in einer Ebene wie der Gang verlaufende Hebebühne fahren. Die Teilkommissionen können damit sogleich auf der Hebebühne zusammengestellt und auf den Boden abgesenkt werden. Die abgesenkten Kastenstapel lassen sich dann – beispielsweise mit einer Sackkarre – zum Kundenlager transportieren; auf dem Rückweg kann dann das Leergut mitgebracht und auf der Hebebühne abgestellt werden, so daß die freien Palettengefache des Fahrzeugs in einem sich dem Entladen unmittelbar anschließenden Arbeitsgang gleich wieder mit Leergut beladen lassen. Das Be- und Entladen läßt sich ausschließlich von der Bürgersteigseite des Fahrzeugs durchführen.

Entspricht die Kommission einer vollen Palette, so läßt sich, sofern der Kunde einen Hubwagen besitzt, eine leere Palette auf die in diesem Fall gegenüber dem Mittelgang um das Maß der Palettenhöhe von 150 mm abzusenkende Hebebühne legen. Diese Palette kann dann mit der Sackkarre vom Mittelgang aus stapelweise beladen werden. Nach dem Absenken der Hebebühne auf den Boden übernimmt der Hubwagen die Palette und befördert sie in das Kundenlager. Auch eventuell vorhandene Roll- bzw. Gitterboxrollbehälter, die sich auf dem Mittelgang entlang den seitlichen Palettengefachen bewegen lassen, können nach dem Be- und Entladen mittels der Hebebühne abgesenkt und angehoben werden.

Das Fahrzeug kann einen Durchgang vom Führerhaus zum Mittelgang des Pritschenbodens aufweisen, vorzugsweise eine türartige Ausnehmung in der Rückwand des Führerhauses und oberhalb des Mittelgangs in der dazu benachbarten Stirnwand eines Aufbaus des Pritschenbodens, wobei die einander gegenüberliegenden Ausnehmungen durch ein sie einkapselndes vorteilhaft balgartiges Schutz- und Verbindungsgehäuse miteinander verbunden sind. Auf diese Weise ist der Mittelgang und damit der Laderaum für den Fahrer unmittelbar zugänglich, ohne daß der Fahrer zunächst aussteigen muß. Das ist insbesondere auf stark befahrenen Straßen, wie Haupt-Geschäftsstraßen mit Durchgangsverkehr, eine große Erleichterung für den Fahrer, der die Ladung über den Mittelgang ohne Gefährdung durch den fließenden Verkehr erreichen kann. Der Fahrer braucht somit nicht mehr außen um das Fahrzeug herum zu gehen und kann das Be- und Entladen, insbesondere von einzelnen Lieferkommissionen, sogleich aus dem Führerhaus hinaus erledigen.

Bei Seitenplanen des Aufbaus, die vertikal mit Abstand nebeneinander angeordnete Federstahlbänder aufweisen und über hebelbetätigten Exzenterverschlüssen im Aufbau spannbar sind, läßt sich einerseits ein automatisches Hochrollen der Planen und somit ein bisher nicht möglicher schneller Zugriff zu der Ladung erreichen. Die federstahlarmierten und durch Exzenterverriegelung gespannten Planen gewährleisten andererseits eine zuverlässige seitliche Ladungssicherung und bieten darüber hinaus einen guten Wetter- und Frostschutz sowie eine Diebstahlsicherung. Die in die Plane eingearbeiteten Federstahlbänder lassen sich einerseits beispielsweise an einem Rundrohr am oberen Ende des Aufbaus und andererseits an einer unten in der Plane angeordneten Querschiene befestigen. Die flexiblen Federstahlbänder sind ca. 80 mm breit und 0,5 bis 1,5 mm dick. Die Querschiene läßt sich in den Außenrahmen des Aufbaus einhängen, so daß die Plane mittels einer das Rundrohr um seine Längsachse verschwenkenden Exzenterverstellung stramm gezogen werden kann.

Die Erfindung wird nachfolgend anhand eines in der Zeichnung dargestellten Ausführungsbeispiels

des näheren erläutert. In der Zeichnung zeigen:

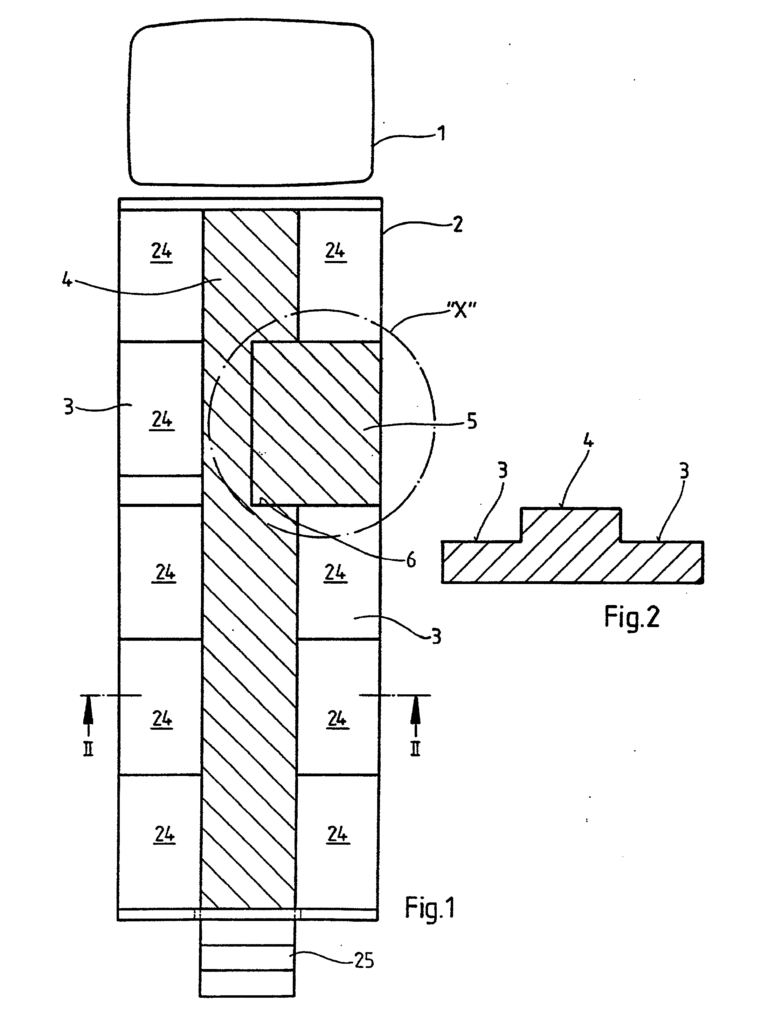

Fig. 1 eine Draufsicht auf den Pritschenboden eines Kraftfahrzeuges, schematisch dargestellt, wobei zur Verdeutlichung ein Mittelgang und eine mit diesem integrierte Hebebühne gegenüber tiefer liegenden seitlichen Ladeflächen schraffiert sind;

Fig. 2 den Gegenstand gemäß Fig. 1 entlang der Linie II-II geschnitten;

Fig. 3 als Einzelheit eine vergrößerte Darstellung des in Fig. 1 mit "X" umgrenzten Bereichs;

Fig. 4 einen Querschnitt des vorderen Bereichs eines Kraftfahrzeugs, schematisch dargestellt; und

Fig. 5 eine Seitenansicht eines Aufbaus eines Kraftfahrzeugs, perspektivisch dargestellt.

Ein Kraftfahrzeug 1 weist einen Pritschenboden 2 mit einem gegenüber seitlichen Ladeflächen 3 höher gelegenen Mittelgang 4 auf. Im Pritschenboden 2 ist an einer Längsseite, vorzugsweise der Bürgersteigseite des Kraftfahrzeugs 1, eine seitliche Hebebühne 5 angeordnet, die in ihrer angehobenen Position in eine zugehörige seitliche Ausnehmung 6 des Mittelgangs eingreift und fluchtend und bündig mit der Oberkante des Mittelgangs 4 verläuft.

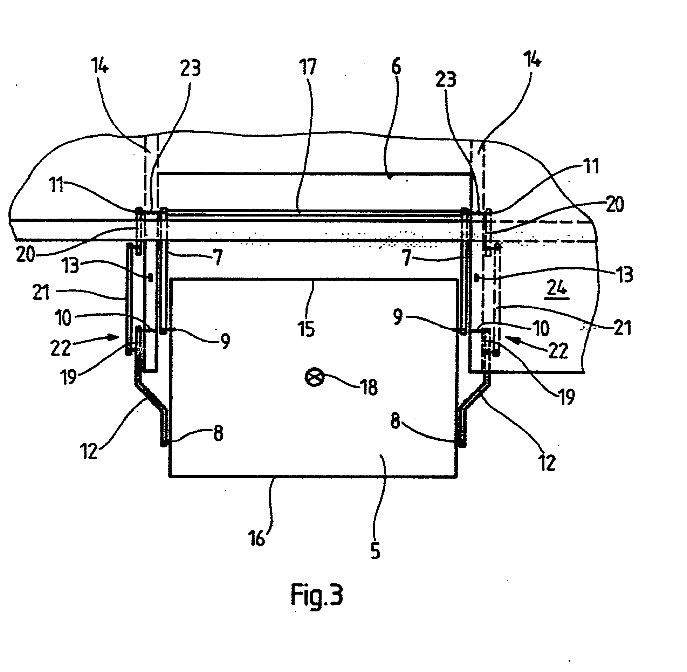

Wie in Fig. 3 dargestellt, läßt sich die Hebebühne 5 mittels Parallelogrammlenkern anheben und auf den Boden absetzen, wozu Lenker 7, 12 über Lager 8, 9 beiderseits der Hebebühne 5 angreifen. Weiterhin sind von der Hebebühne 5 abgekehrte Lager 10, 11 der Parallelogrammlenker an je einem sich seitlich parallel zu der Hebebühne 5 erstreckenden, oben seitlich außerhalb der Hebebühne befindlichen, nicht dargestellten Tragbalken angeordnet. Jeder Tragbalken weist zwischen den Lagern 10, 11 einen als weiteres Lager ausgebildeten Haltepunkt 13 am unteren Ende eines Tragarmes auf. Die nicht dargestellten Tragarme sind jeweils unterhalb von sich seitlich der Hebebühne erstreckenden Auslegern 14 des Fahrzeugrahmens derart befestigt, daß sie ein ungehindertes Schwenken der bezüglich des Pritschenbodens 2 inneren Lenkern 7 gestatten. Die demgegenüber in Bezug auf die Ladefläche äußeren Lenker 12 sind hingegen schwenkbar angeordnet und an ihrem hebebühneseitigen Ende derart gekröpft, daß sie sich zwischen die Tragarme haltenden Auslegern 14 und den Seitenrändern der Hebebühne 5 frei bewegen können. Der Abstand der auf die Mitte des Pritschenbodens 2 bezogenen Innenkante 15 und der Außenkante 16 der Hebebühne 5 ist etwa so groß wie die halbe Fahrzeugbreite.

Die wirksame Länge der in Bezug auf den Pritschenboden 2 äußeren Lenker 12 ist geringer als der Abstand ihrer hebebühneseitigen Lager 8 von der Innenkante 15 der Hebebühne 5; dieser Abstand ist seinerseits - zumindest in der Strecklage des Lenkerparallelogramms - geringer als der Abstand zwischen den einander diagonal gegenüberliegenden Lagern 8 und 11, so daß sich die Lenker 7 an ihren Lagern 11 durch ein Torsionsrohr 17 verbinden lassen. Die Lager 10, 11 befinden sich zwischen den Projektionslinien der Innenkante 15 und der Außenkante 16 der angehobenen Hebebühne 5, wobei der Schwerpunkt 18 der angehobenen Hebebühne 5 oberhalb der von den Lagern 10, 11 umrissenen Fläche liegt.

Die Lenker 7, 12 bilden doppelarmige Kniehebel, deren von der Hebebühne abgekehrte Arme 19, 20 zur Außenkante 16 der angehobenen Hebebühne 5 hin abgewickelt und mit einer Schubstange 21 gelenkig verbunden sind, so daß sie einen weiteren Parallelogrammlenker 22 bilden. Dabei ist der Arm 20 des inneren Lenkers 7 auf einer durch den nicht dargestellten Tragbalken gesteckten und von dem Lager 11 gehaltenen Kniehebelwelle 23 drehfest angeordnet. Auf diese Weise kann die von einer zwischen dem Ausleger 14 und dem äußeren Lenker 12 von einer Verstelleinheit auf den Lenker 12 ausgeübte Schub- oder Druckkraft gleichzeitig auf den inneren Lenker 7 und gegebenenfalls auch über das Torsionsrohr 17 auf die beiden gegenüberliegenden Lenker der Hebebühne 5 wirken.

Auf diese Weise läßt sich die Hebebühne 5 mit einer ausreichend großen Fläche ausbilden, so daß insbesondere Normpaletten samt Hubwagen bzw. Rollbehälter angehoben und abgesenkt werden können, ohne daß hierdurch allzu hohe Kräfte für das Heben und Senken erforderlich sind. Gleichzeitig steht die Hebebühne 5 während des Transportes als integrierte Ladefläche voll zur Verfügung.

Damit lassen sich größere Teilkommissionen der mit Paletten beladenen seitlichen Ladeflächen 3 des Pritschenbodens 2, wozu die seitlichen Ladeflächen 3 beispielsweise in mehrere Palettengefache 24 unterteilt sein können, die sämtlich vom Mittelgang 4 aus zugänglich sind, auf der Hebebühne 5 zusammenstellen und auf den Boden absenken. Kleinere Lieferkommissionen bzw. einzelne Kästen oder Dosenstapel können über eine heckseitige Treppe 25 ausgeliefert werden.

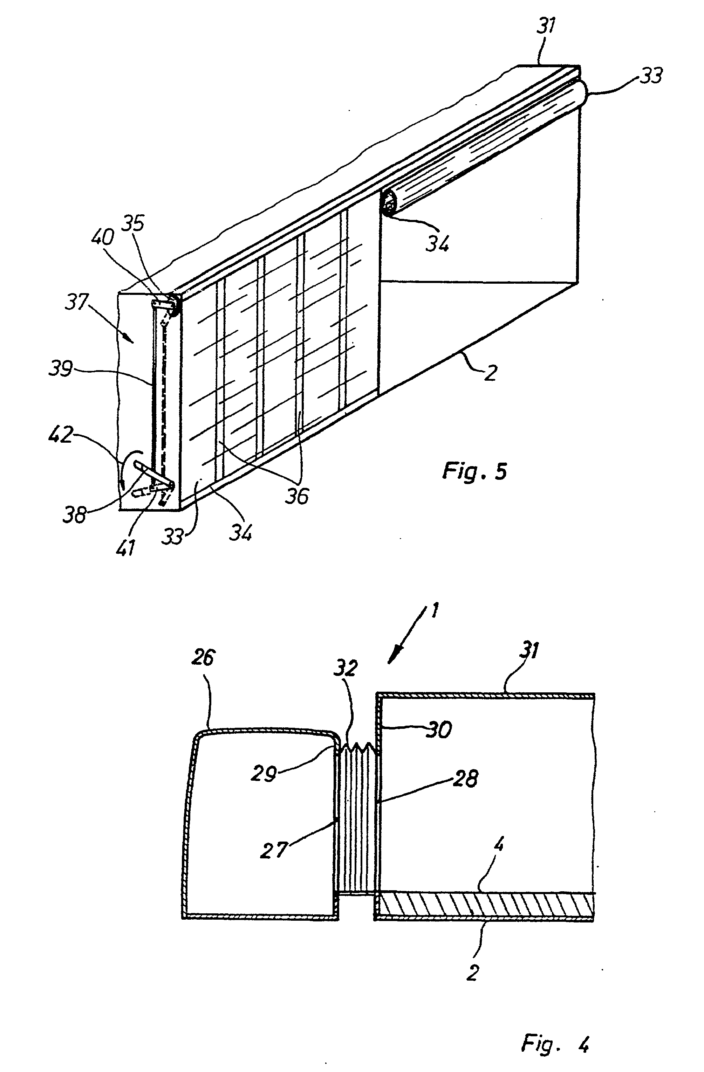

Damit sich der Mittelgang 4 des Laderaums des Fahrzeugs 1 unmittelbar vom Führerhaus 26 erreichen läßt, befindet sich eine türartige Ausnehmung 27, 28 sowohl in einer Rückwand 29 des Führerhauses 26 als auch in einer dazu benachbarten Stirnwand 30 eines Aufbaus 31 des Pritschenbodens 2 (Fig. 4). Die beiden Ausnehmungen 27, 28 sind durch ein begehbares, den Abstand zwischen dem Führerhaus 26 und dem Aufbau 31 überbrückendes Schutzgehäuse 32 eingekapselt und miteinander verbunden; das balgartige Gehäuse 32 ist begrenzt nachgiebig ausgebildet und paßt sich durch Bewegungen hervorgerufenen Lageänderungen an bzw. gleicht diese aus.

Die Ladefläche des Fahrzeugs 1 wird an den Längsseiten von mit Federstahlbändern 36 armierten Seitenplanen 33 verschlossen. Die vertikal mit Abstand nebeneinander angeordneten Federstahlbänder 36 sind mit der Plane 33 einerseits an einem Rundrohr 35 oben am Aufbau 31 und andererseits unten in der Plane 33 an einer flachen Querschiene 34 oder einem beliebigen anderen, den Belastungen beim Spannen standhaltenden Profil befestigt. Die heruntergezogene Plane 33 wird mit der Querschiene 34 am Außenrahmen des Fahrzeugs 1 eingehängt und beim Verschwenken eines mit einem Exzenterverschluß 37 zusammenwirkenden Hebels 38 stramm gespannt. Der beispielsweise an der front- und/oder heckseitigen Stirnwand 30 des Aufbaus 1 angeordnete Exzenterverschluß 37 besteht aus zwei durch eine Zugstange 39 oder ein Seil miteinander bewegungsabhängig gekoppelten Stellhebeln 40,41, von denen der eine, obere Stellhebel 40 am Rundrohr 35 angreift und der andere, untere Stellhebel 41 drehbeweglich in der Stirnwand 30 lagert und mit dem in Griffhöhe vom Boden angeordneten Schwenkhebel 38 verbunden ist. Beim Schwenken des Hebels 38 in Pfeilrichtung 42 gelangen die Stellhebel 40,41 in die in Fig. 5 strichpunktiert dargestellte Spannlage; dabei wird das Rundrohr 35 um seine Längsachse gedreht und die daran befestigte, unten im Außenrahmen eingehängte Plane 33 gespannt. Zum Lösen der Plane 33 wird der Hebel 38 zurück in seine Ausgangslage geschwenkt; nach dem Aushängen der Querschiene 34 kann sich die Plane 33 selbsttätig aufrollen, wie für die in Fig. 5 rechte Seitenplane 33 dargestellt.

## Patentansprüche

1. Kraftfahrzeug mit einem eine Ladefläche bereitstellenden Pritschenboden, insbesondere zur Getränkeauslieferung, gekennzeichnet durch einen gegenüber seitlichen Ladeflächen (3) höher gelegenen Mittelgang (4) des Pritschenbodens (2), über den die Ladeflächen (3) frei zugänglich sind, der mit einer seitlichen Ausnehmung (6) versehen ist, in die eine angehobene Hebebühne (5) fluchtend und bündig mit der Oberkante des Mittelgangs (4) eingreift.

2. Kraftfahrzeug nach Anspruch 1, gekennzeichnet durch einen Durchgang (26) zum Mittelgang (4) des Pritschenbodens (2).

3. Kraftfahrzeug nach Anspruch 2, gekennzeichnet durch eine türartige Ausnehmung (27, 28) in der Rückwand (29) des Führerhauses (26) und oberhalb des Mittelgangs (4) in der dazu benachbarten Stirnwand (30) eines Aufbaus (31) des Pritschenbodens (2), wobei die einander gegenüberliegenden Ausnehmungen (27, 28) durch ein sie einkapselndes Gehäuse miteinander verbunden sind.

4. Kraftfahrzeug nach Anspruch 2 oder 3, gekennzeichnet durch ein balgartiges Schutz- und Verbindungsgehäuse (32).

5. Kraftfahrzeug nach einem oder mehreren der Ansprüche 1 bis 4, dadurch gekennzeichnet, daß Seitenplanen (33) des Aufbaus (31) vertikal mit Abstand nebeneinander angeordnete Federstahlbänder (36) aufweisen und über hebelbetätigten Exzenterverschlüssen (37) im Aufbau spannbar sind.

## Claims

1. A vehicle with a platform providing a loading surface, in particular for the delivery of drinks, characterised by a central walkway (4) of the platform (2) that is at a higher level than lateral loading surfaces (3) through which the loading surfaces (3) are freely accessible, and which is provided with a lateral recess (6) into which a lifting platform (5) engages when raised so that it is aligned and flush with the upper edge of the central walkway (4).

2. A vehicle according to claim 1, characterised by a passage (26) to the central walkway (4) of the platform (2).

3. A vehicle according to claim 2, characterised by a door-like opening (27, 28) in the rear wall (29) of the driver's cab (26) and in the adjacent end wall (301) of a superstructure (31) of the central walkway (4) on the platform (2), the facing openings (27, 28) being connected by a housing enclosing them.

4. A vehicle according to claim 2 or claim 3, characterised in that the protective and connecting housing (32) is bellows-like.

5. A vehicle according to any one or more of claims 1 to 4, characterised in that lateral tarpaulins (33) of the superstructure (31) have vertical spring steel strips (36) spaced alongside one another and can be stretched tight in the superstructure by means of lever-actuated cam type closures (37).

**Revendications**

1. Véhicule automobile comportant une plateforme servant de surface de chargement, notamment pour la livraison de boissons, caractérisé par une allée centrale (4) de la plateforme, située à un niveau supérieur par rapport aux surfaces de chargements latérales (3), allée centrale par laquelle les surfaces de chargement (3) sont librement accessibles et qui comporte un évidement latéral (6) dans lequel une plateforme de levage (5) relevée s'adapte bout à bout avec l'arête supérieure de l'allée centrale (4) et dans le même plan que celle-ci.

2. Véhicule automobile selon la revendication 1, caractérisé par un passage (26) vers l'allée centrale (4) de la plateforme (2).

3. Véhicule automobile selon la revendication 2, caractérisé par une ouverture (27, 28) analogue à une porte pratiquée dans la paroi arrière (29) de la cabine de pilotage (26) et, au-delà de l'allée centrale (4), dans la paroi frontale adjacente (30) d'une construction (31) surmontant la plateforme (2), les ouvertures mutuellement opposées (27, 28) étant reliées l'une à l'autre par un carter.

4. Véhicule automobile selon la revendication 2 ou 3, caractérisé par un carter de liaison et de protection (32) en forme de soufflet.

5. Véhicule automobile selon l'une ou plusieurs des revendications 1 à 4, caractérisé en ce que des bâches latérales (33) de la construction (31) surmontant la plateforme comportent des bandes d'acier ressort (36) agencées verticalement à distance l'une à côté de l'autre et sont aptes à être tendues dans ladite construction à l'aide de dispositifs de fermeture excentriques (37) commandables par levier.

Fig.1

Fig.2

Fig.3

Fig. 5

Fig. 4